# EUROPÄISCHE PATENTSCHRIFT

(11) **EP 2 639 411 B1**
(45) Veröffentlichungstag und Bekanntmachung des Hinweises auf die Patenterteilung: **10.12.2014**
(21) Anmeldenummer: 12159047.5
(22) Anmeldetag: 12.03.2012
(51) Int. Cl.: F01D 25/10, F04D 27/02, F01D 25/14, F01D 25/24

(54) **Gehäuse einer Stömungsmaschine mit einem Fluidleitsystem**
Casing of a turbomachine with a by-passing system
Boîtier de turbomachine avec un système de recirculation de fluide

(43) Veröffentlichungstag der Anmeldung: 18.09.2013
(73) Patentinhaber: MTU Aero Engines AG, 80995 München (DE)
(72) Erfinder: Heß, Thomas, 81541 München (DE); Dr. Bayer, Erwin, 85221 Dachau (DE); Hiller, Sven, 85244 Röhrmoos (DE); Geiger, Peter, 80997 München (DE)

(56) Entgegenhaltungen:
- DE-A1- 1 476 791
- DE-A1- 19 734 216
- FR-A1- 2 949 518
- US-A- 3 344 606

## Beschreibung

Die Erfindung betrifft ein Gehäuse für eine Strömungsmaschine nach dem Oberbegriff des Patentanspruchs 1 sowie eine Strömungsmaschine.

Zur Erhöhung der aerodynamischen Stabilität bei Strömungsmaschinen wie Triebwerken oder stationären Gasturbinen ist es bekannt, die so genannte Pumpgrenze von Verdichtern zu erweitern. Hierzu wird üblicherweise ein Luftstrom im Blattspitzenbereich einer vorderen Laufschaufelreihe in die Hauptströmung eingeblasen. Der Luftstrom kann, wie in der WO 2009/143820 A2 gezeigt, ein Außenluftstrom sein oder, wie in dem Patent EP 1 382 855 B1 gezeigt, ein Teilstrom sein, der im Bereich einer hinteren Verdichterstufe von der Hauptströmung abgezapft wurde. Generell ist eine aufwendige externe Verrohrung zur Gewinnung und Zuführung des einzublasenden Luftstroms notwendig.

Zur Erhöhung der thermischen Stabilität einer Strömungsmaschine ist es bekannt, insbesondere turbinenseitig eine aktive Spaltkontrolle (Active Clearance Control - ACC) vorzusehen, um einen Radialspalt der Laufschaufelblattspitzen zum Turbinengehäuse einzustellen. Eine derartige Spaltkontrolle ist in dem Patent US 6,454,529 B1 gezeigt. Diese bekannte Spaltkontrolle hat eine Vielzahl von plattenartigen Ringsegmenten, die eine externe Verrohrung zum Zuführen eines verdichterseitig abgezapften Kühlluftstroms zum Turbinengehäuse aufweist. Problematisch an dieser Spaltkontrolle sind jedoch der hohe vorrichtungstechnische und montagetechnische Aufwand sowie eine erhebliche Gewichtszunahme der Strömungsmaschine durch die Verrohrung.

Die DE19734216A1 beschreibt die Kühlung eines Gasturbinentriebwerkes und insbesondere das Steuern des Spiels zwischen einer sich drehenden Turbinenschaufel und einer stationären Ummantelung.

Die FR2949518 beschreibt einen Kompressor mit Rezirkulation, die dazu dient die Pumpneigung zu verringern.

Aufgabe der Erfindung ist es, ein Gehäuse für eine Strömungsmaschine zu schaffen, das die vorgenannten Nachteile beseitigt und eine hohe aerodynamische und thermische Stabilität ermöglicht. Zudem ist es Aufgabe der Erfindung, eine Strömungsmaschine mit einem verbesserten Betriebsverhalten zu schaffen.

Diese Aufgabe wird gelöst durch ein Gehäuse mit den Merkmalen des Patentanspruchs 1 und durch eine Strömungsmaschine mit den Merkmalen des Patentanspruchs 12.

Ein erfindungsgemäßes Gehäuse für eine Strömungsmaschine, insbesondere ein Flugzeugtriebwerk, hat eine Umfangswandung zur Begrenzung eines von einer Hauptströmung durchströmbaren Ringraums sowie ein Fluidsystem zum Umleiten eines Teilstroms der Hauptströmung. Das Fluidsystem hat einen Axialkanal, einen vorderen integralen Ringkanal sowie einen hinteren integralen Ringkanal, die mit dem Axialkanal in Fluidverbindung stehen und die eine vordere Ringraumöffnung und eine hintere Ringraumöffnung aufweisen. Erfindungsgemäß sind eine vordere Ventileinrichtung und eine von dieser getrennt ansteuerbare hintere Ventileinrichtung zum Auf- und Zusteuern der Ringraumöffnungen und eine Auslassöffnung zur Entnahme des Teilstroms aus dem Fluidsystem vorgesehen. Die Ventileinrichtungen sind dergestalt, dass im zugesteuerten Zustand der hinteren Ringraumöffnung der Teilstrom durch den hinteren Ringkanal führbar ist und im zugesteuerten Zustand der vorderen Ringraumöffnung der Teilstrom durch den vorderen Ringraum führbar ist.

Das erfindungsgemäße Gehäuse ermöglicht die Verwendung einer einzigen Verrohrung zur Verbesserung der aerodynamischen Stabilität und zur Verbesserung der thermischen Stabilität einer Strömungsmaschine. Zwei voneinander getrennte Verrohrungen zur aerodynamischen und zur thermischen Stabilisierung sind nicht notwendig. Hierdurch werden insbesondere der gerätetechnische Aufwand, die Gehäusemontage und Gehäusedemontage, sowie das Gesamtgewicht des Gehäuses reduziert. Das erfindungsgemäße Gehäuse ist daher trotz des Fluidsystems sehr kompakt und leicht. Das erfindungsgemäße Gehäuse ermöglicht eine Verbesserung der aerodynamischen Stabilität einer Strömungsmaschine, da bspw. durch das Fluidsystem ein Teilstrom im Bereich einer hinteren Verdichterstufe entnommen und im Bereich einer vorderen Verdichterstufe eingeblasen werden kann. Zudem ermöglicht das erfindungsgemäße Gehäuse eine Verbesserung der thermischen Stabilität, da durch das Schließen der Ringkanalöffnungen die integralen bzw. in das Gehäuse zumindest abschnittsweisen integrierten Ringkanäle als Kühl- oder Heizkanäle verwendet werden können und somit zumindest die Gehäusebereiche, in denen sich die Ringkanäle befindet, einzeln gekühlt oder erwärmt werden können. Beispielsweise kann ein Gehäusebereich nahe des hinteren Ringkanals durch die Entnahme des Teilstroms an einer vorderen Verdichterstufe gekühlt werden. Hingegen kann ein Gehäusebereich nahe des vorderen Ringkanals durch die Entnahme des Teilstroms an einer hinteren Verdichterstufe erwärmt werden. Die thermische Stabilisierung bzw. Steuerung ist besonders bei transienten Vorgängen, zum Beispiel bei einer Beschleunigung und einer Verzögerung, von Bedeutung und kann das Betriebsverhalten des Verdichters maßgeblich beeinflussen. Die Ringkanäle bilden aufgrund ihrer Integrierung mit dem Gehäuse einen gemeinsamen Wandungs- bzw. Umfangsabschnitt und somit jeweils eine große thermische Wirkfläche. Sie können außen über das Gehäuse geführt sein oder zwischen einer Innen- und einer Außenwandung des Gehäuses angeordnet sein. Dadurch, dass die Ventileinrichtungen einzeln ansteuerbar sind, kann eine optimale aerodynamische und thermische Wirkung bei minimaler Beeinträchtigung der Hauptströmung im Ringraum erzielt werden. Das Gehäuse wird bevorzugterweise durch ein generatives Fertigungsverfahren wie Lasersintern oder Laserschmelzen hergestellt. Hierdurch können das Gehäuse und die Kanäle in strömungstechnischer Hinsicht optimal ausgelegt werden, so dass beispielsweise die Teilstromentnahme, Teilstromführung, Gehäuseströmung und Schaufelumströmung verbessert wird. Zudem kann das Gehäuse strukturmechanisch optimal gestaltet werden. Zum Beispiel kann durch eine zelluläre Struktur das Gehäuse weiter gewichtsoptimiert werden und/oder die Struktur kann schwingungsdämpfende Eigenschaften aufweisen. Durch die generative Herstellung kann beispielsweise der hintere Ringkanal so in das Gehäuse integriert werden, dass es zu keiner axialen Verlängerung des Ringraums kommt, und dass die Teilstromentnahme verlustarm erfolgt.

Die thermische Wirkfläche lässt sich vergrößern, wenn ebenfalls der Axialkanal als Kühlkanal oder als Heizkanal wirkt. Bevorzugterweise ist daher der Axialkanal ebenfalls in das Gehäuse integriert und bildet somit einen gemeinsamen Wandungs- bzw. Umfangsabschnitt mit dem Gehäuse. Der Axialkanal kann dabei außen über das Gehäuse geführt sein oder zwischen einer Innen- und einer Außenwandung des Gehäuses angeordnet sein. Gleichzeitig wird durch die integrale Ausbildung des Axialkanals die Kompaktheit des Gehäuses verbessert.

Die thermische Stabilität lässt sich weiter verbessern, wenn sich der Axialkanal auch in Umfangsrichtung des Gehäuses erstreckt und als ein Umfangskanal bzw. Ringkanal ausgebildet ist, da hierdurch das Gehäuse im Bereich des Axialkanals gleichmäßig über seinen gesamten Umfang thermisch eingestellt wird.

Alternativ kann eine Vielzahl von Axialkanälen vorgesehen sein, die gleichmäßig über den Gehäuseumfang verteilt sind. Durch die Vielzahl von Axialkanälen wird zudem eine Redundanz geschaffen, so dass bei Beschädigung eines der Axialkanäle der Teilstrom durch die übrigen Axialkanäle umgeleitet werden kann.

Bevorzugterweise sind die Ringkanäle auf jeweils eine Maschinenstufe begrenzt. Hierdurch kann der Teilstrom gezielt in nur einem Stufenbereich aus dem Ringraum entnommen bzw. in den Ringraum eingeblasen werden. Alternativ können sich die Ringkanäle jedoch auch über mehrere Maschinenstufen erstrecken.

Zur Steigerung der Flexibilität des Fluidsystems kann zumindest ein weiterer Ringkanal mit einer Ringraumöffnung vorgesehen sein, dem eine einzeln ansteuerbare Ventileinrichtung zum Auf- und Zusteuern seiner Ringraumöffnung zugeordnet ist. Der zumindest eine weitere Ringkanal ist bevorzugterweise im Bereich einer Maschinenstufe angeordnet.

Zur weiteren Verbesserung der thermischen Stabilität kann das Fluidsystem zumindest einen zum Ringraum hin geschlossenen Umfangskanal haben, der mit zumindest einem der Kanäle in Fluidverbindung steht. Hierdurch kann ein weiterer Gehäusebereich mit dem zumindest einen Teilstrom beaufschlagt und somit thermisch eingestellt werden. Beispielsweise ist es vorstellbar, zumindest einen derartigen Umfangskanal im Bereich von gehäuseseitigen Leitschaufelaufnahmen vorzusehen.

Zur Abkühlung des zumindest einen Teilstroms kann der zumindest eine Axialkanal eine zur Außenumgebung weisende Kühleinrichtung aufweisen. Diese können zum Beispiel in die Kanalwandung integrierte Kühlrippen sein.

Zur weiteren aerodynamischen und thermischen Stabilisierung kann das Fluidsystem eine Außenöffnung zum Einleiten eines Außenfluids in die Ringkanäle aufweisen. Das Außenfluid kann sowohl zur aerodynamischen Stabilisierung, also zum Einblasen in den Ringraum, als auch zur thermischen Stabilisierung, also zur Kühlung oder Erwärmung eines Gehäusebereichs, eingesetzt werden.

Um mit einer geringen Teilstrommenge eine hohe aerodynamische Stabilisierung zu erreichen, können zumindest Einlassventile der Ventileinrichtungen pulsierbar sein.

Zur Vereinfachung der Montage und Demontage setzt sich das Gehäuse bevorzugterweise aus einer Vielzahl von Segmenten zusammen. Die Segmente sind beispielsweise Halbschalen, die sich über einen Winkelbereich von jeweils 180° erstrecken. Die Segmente können sich jedoch auch nur jeweils über einen Winkelbereich <180° erstrecken. Das Gehäuse kann jedoch auch derart sein, dass es eine untere Halbschale und eine Vielzahl von oberen einzelnen Segmenten hat. Alternativ kann das Gehäuse auch ein umfangsseitig geschlossenes Ringgehäuse sein.

Eine bevorzugte Strömungsmaschine ist mit einem erfindungsgemäßen Gehäuse versehen. Hierdurch kann mit einem geringen gerätetechnischen Aufwand sowohl die aerodynamische Stabilität als auch die thermische Stabilität der Strömungsmaschine gesteigert und somit das Betriebsverhalten der Strömungsmaschine verbessert werden.

Sonstige vorteilhafte Ausführungsbeispiele der Erfindung sind Gegenstand weiterer Unteransprüche.

Im Folgenden werden bevorzugte Ausführungsbeispiele der Erfindung anhand von stark vereinfachten schematischen Darstellungen der Erfindung näher erläutert. Es zeigen:
- Figur 1: einen Axialschnitt durch ein erfindungsgemäßes Gehäuse für eine Strömungsmaschine,
- Figur 2: eine perspektivische Darstellung einer ersten beispielhaften Gehäusevariante,
- Figur 3: eine perspektivische Darstellung einer zweiten beispielhaften Gehäusevariante,
- Figur 4: eine Stirnansicht einer dritten beispielhaften Gehäusevariante,
- Figur 5: eine Detaildarstellung der dritten Gehäusevariante,
- Figur 6: eine beispielhafte Fluidsystemvariante,
- Figur 7: einen Querschnitt durch das Gehäuse aus Figur 1 im Bereich eines Umfangskanals,
- Figuren 8 und 9: Schnittdarstellungen des Umfangskanals,
- Figur 10: beispielhafte Umfangskanäle im Turbinenbereich,
- Figur 11: eine Draufsicht auf ein Segment einer beispielhaften doppelwandigen Gehäusevariante mit einer Fluidsystemveriante,
- Figur 12: einen Axialschnitt durch das Segment aus Figur 11,
- Figur 13: einen Axialschnitt durch eine weitere beispielhafte doppelwandige Gehäusevariante,
- Figur 14: ein beispielhaftes Schaltbild einer Fluidsystemvariante,
- Figuren 15 bis 19: beispielhafte Schaltstellungen der Fluidsystemvariante aus Figur 14,
- Figur 20: eine gehäuseseitige Grenzschichtabsaugung im Axialschnitt, und
- Figur 21: eine stromaufwärtige Ansicht auf einem in einem Gehäuse gelagerten Rotor.

In den Figuren tragen gleiche konstruktive Elemente gleiche Bezugszeichen, wobei aus Gründen der Übersichtlichkeit bei mehreren gleichen konstruktiven Elementen in einer Figur vorrangig lediglich ein Element mit einem Bezugszeichen versehen ist.

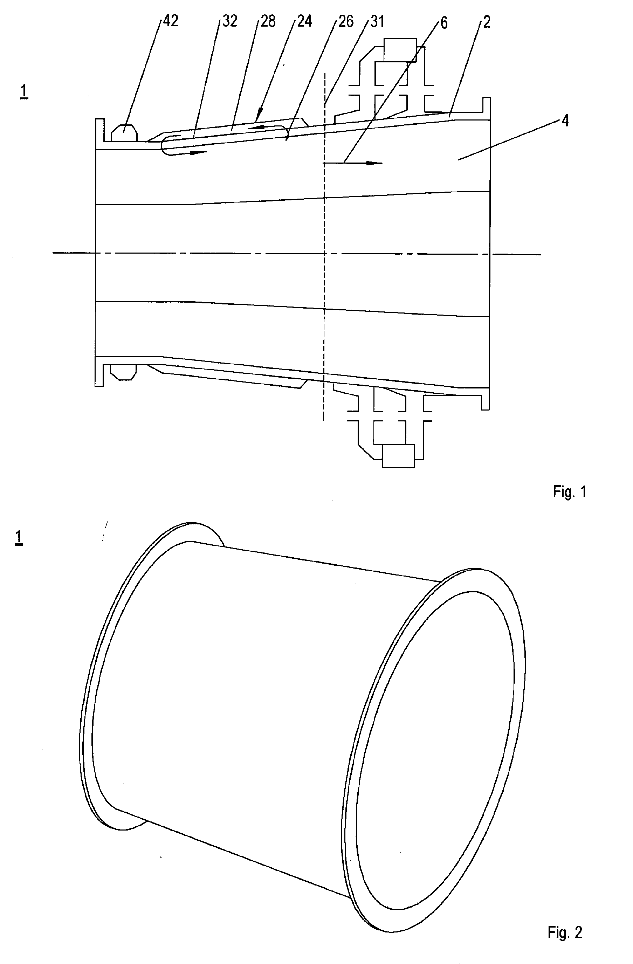

In Figur 1 ist ein Axialschnitt durch ein erfindungsgemäßes Gehäuse 1 einer Strömungsmaschine wie ein Flugzeugtriebwerk gezeigt. Das Gehäuse 1 wird bevorzugterweise generativ hergestellt und ist verdichterseitig angeordnet. Es hat eine sich in Strömungsrichtung konisch erweiternde Umfangswandung 2, die einen Ringraum 4 begrenzt, der von einer Hauptströmung 6 axial von links nach rechts durchströmt wird.

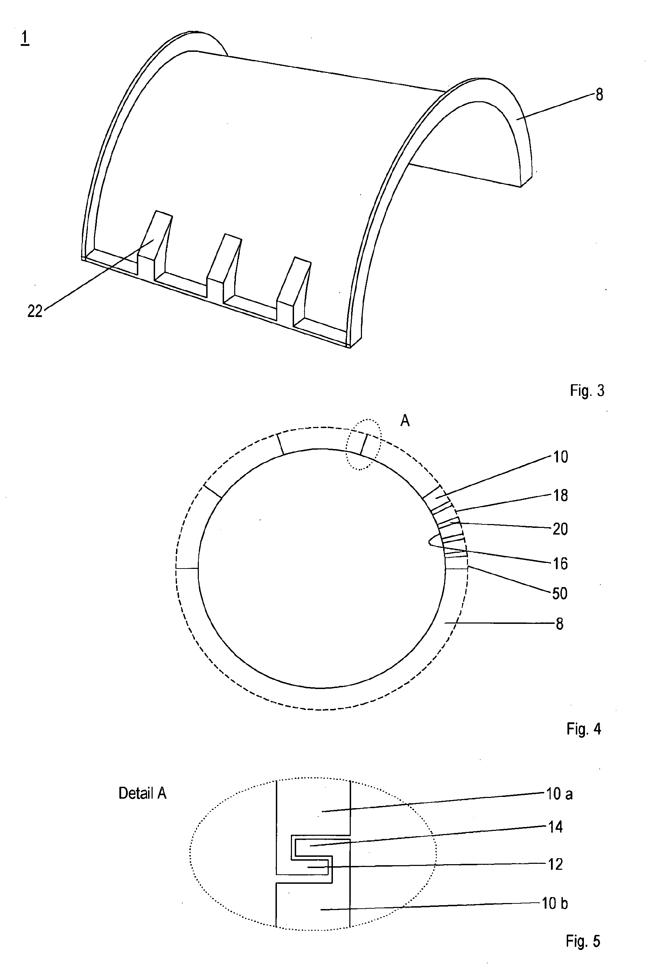

Gemäß den Darstellungen in Figur 2, 3 und 4 ist das Gehäuse 1 beispielsweise ein einteiliges Ringgehäuse (Figur 2) oder ein mehrteiliges Gehäuse (Figuren 3 und 4). Das mehrteilige Gehäuse 1 kann sich aus einer oberen Halbschalen 8 und einer nicht gezeigten unteren Halbschale mit einem Winkelbereich von jeweils 180° zusammensetzen (Figur 3) oder aus einer unteren Halbschale 8 und einer Vielzahl von oberen Einzelsegmenten 10 mit einem Winkelabschnitt kleiner als 180° bestehen (Figur 4). Selbstverständlich kann das Gehäuse 1 auch ausschließlich aus einer Vielzahl von Einzelsegmenten 10 mit einem Winkelabschnitt kleiner als 180° bestehen (nicht gezeigt). Die Verbindung der Einzelsegmente 10 bzw. 10a, 10b zur Bildung des Gehäuses 1 kann gemäß Figur 5 beispielsweise über seitliche Steckflansche erfolgen, die von zwei formschlüssig miteinander in Eingriff bringbaren seitlichen Verbindungselementen wie Hakenelementen 12, 14 gebildet werden. Zur radialen Abdichtung des Ringraums 4 sind die Einzelelemente 10 entsprechend gegeneinander abgedichtet. Alternativ können die Einzelsegmente 10 miteinander verschweißt werden. Ein geeignetes Schweißverfahren ist zum Beispiel das Elektrostrahlschweißen.

Die Umfangswandung 2 des Gehäuses 1 kann einwandig (Figuren 1, 2 und 3) oder mehrwandig sein. Wenn das Gehäuse 1 mehrwandig ist, kann es zum Beispiel wie in Figur 4 gezeigt eine Innenumfangswandung 16, eine Außenumfangswandung 18 sowie eine Stützstruktur 20 zur Beabstandung und Verbindung der Wandungen 16, 18 haben.

Zur Stabilisierung kann das Gehäuse 1 unabhängig von einer Ein- oder Mehrwandigkeit außenumfangsseitige Versteifungsrippen 22 aufweisen (Figur 3).

Wie in Figur 1 gezeigt, ist das Gehäuse 1 mit einem Fluidsystem 24 zum Umleiten eines Teilstroms 26 der Hauptströmung 6 versehen. Insbesondere dient das Fluidsystem 24 bzw. das Umleiten des Teilstroms 26 zur aerodynamischen Stabilisierung und zur thermischen Stabilisierung der Strömungsmaschine. Das Fluidsystem 24 ist bevorzugterweise strukturell in das Gehäuse 1 integriert und wird bei der insbesondere generativen Herstellung des Gehäuses 1 unmittelbar mit ausgebildet.

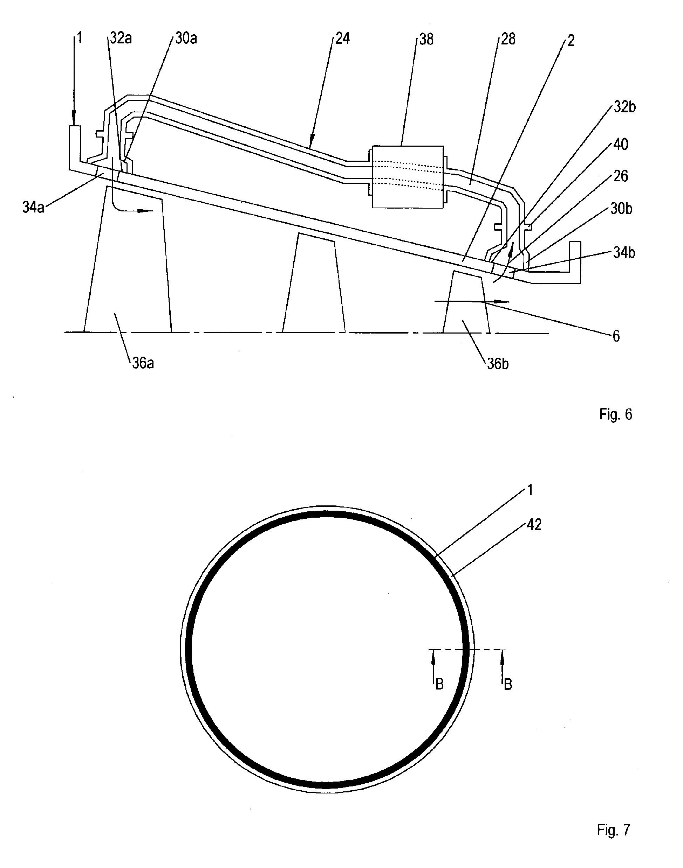

Wie in Figur 6 gezeigt hat das Fluidsystem 24 eine Vielzahl von Axialkanälen 28, einen stromaufwärtigen bzw. vorderen integralen Ringkanal 30a und einen stromabwärtigen bzw. hinteren integralen Ringkanal 30b. Die Axialkanäle 28 sind identische Einzelrohre, die sich in axialer Richtung erstrecken und vorzugsweise gleichmäßig über den Gehäuseumfang verteilt sind. Die Axialkanäle 28 münden in die Ringkanäle 30a, 30b und können von der Umfangswandung 2 beabstandet sein (s. auch beispielhafte Darstellung rechts von der vertikalen Hilfslinie 31 in Figur 1) oder derart in das Gehäuse 1 integriert sein, dass die Umfangswandung 2 jeweils einen Wandungsabschnitt 32 der Axialkanäle 28 bildet (s. beispielhafte Darstellung links von der vertikalen Hilfslinie 31 in Figur 1).

Die Ringkanäle 30a, 30b umgreifen das Gehäuse 1 und sind gemäß Figur 6 derart in das Gehäuse 1 integriert, dass die Umfangswandung 2 jeweils einen Wandungsabschnitt 32a, 32b der Ringkanäle 30a, 30b bildet. Die Ringkanäle 30a, 30b haben jeweils eine die Wandungsabschnitte 32a, 32b durchsetzende Ringraumöffnung 34a, 34b. Die Ringraumöffnungen 34a, 34b können als eine Vielzahl von Einzelöffnungen oder beispielsweise als jeweils eine sich in Umfangsrichtung erstreckende schlitzartige Ringraumöffnung ausgebildet sein.

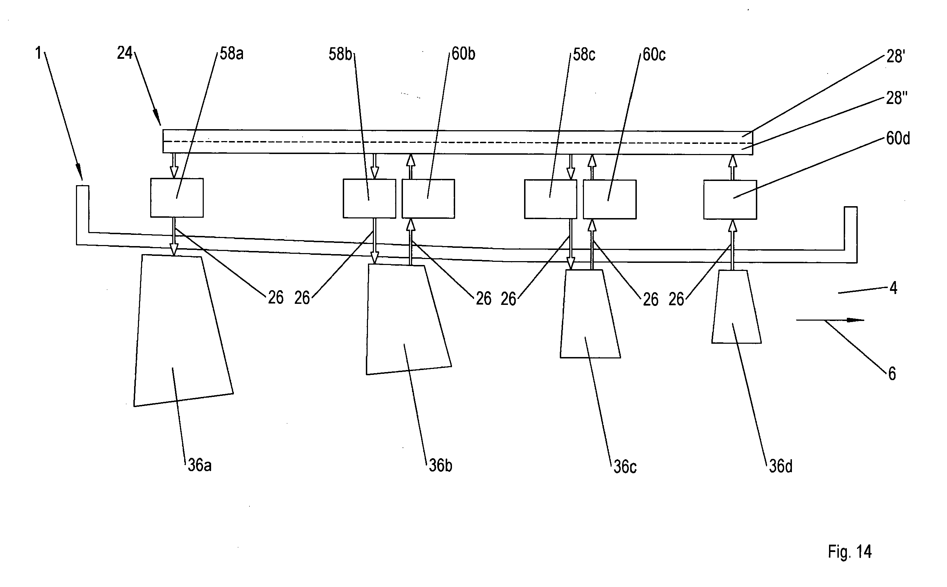

In dem in Figur 6 gezeigten Ausführungsbeispiel sind zwei Ringkanäle 30a, 30b im Bereich jeweils einer Verdichterstufe 36a, 36b der Strömungsmaschine angeordnet und dabei über eine nicht bezifferte Zwischenstufe voneinander beabstandet. Die Ringkanäle 30a, 30b sind vorzugsweise derart zu den Verdichterstufen 36a, 36b positioniert, dass die vordere Ringraumöffnung 34a im Vorderkantenbereich der Laufschaufelen der vorderen Verdichterstufe 36a und die hintere Ringraumöffnung 34b im Hinterkantenbereich der Leit- oder Laufschaufeln der hinteren Verdichterstufe 36b angeordnet ist. Die Ringkanäle 30a, 30b können sich jedoch auch über mehrere Verdichterstufen 36a, 36b erstrecken (nicht gezeigt). Ebenso sind eine Vielzahl von Ringkanälen 30a, 30b vorstellbar, die jeweils einer Verdichterstufe 36a, 36b zugeordnet sind (vgl. Figur 14).

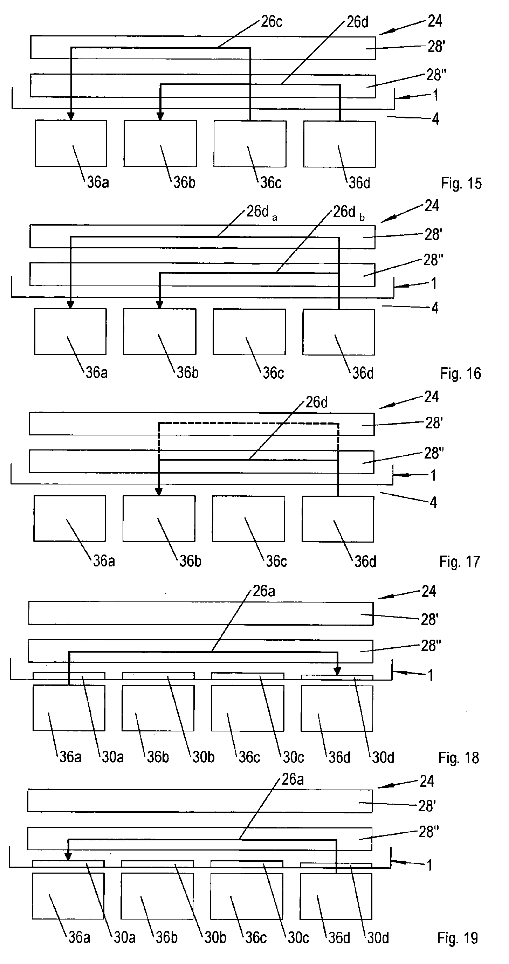

Zum Auf- und Zusteuern der Ringraumöffnungen 34a, 34b und somit zur Entnahme und zum Einblasen des Teilstroms 26 ist im vorderen Ringkanal 30a und im hinteren Ringkanal 30b jeweils eine Ventileinrichtung mit zumindest einem Einlassventil und mit zumindest einem Auslassventil angeordnet (nicht dargestellt, s. Figuren 15 bis 19). Somit kann der Teilstrom 26 wie skizziert über den hinteren Ringkanal 30b entnommen und zur Stabilisierung über den vorderen Ringkanal 30a eingeblasen werden. Alternativ kann der Teilstrom 26 zur Erwärmung des Gehäuses 1 im Bereich der vorderen Verdichterstufe 36a oder zur Kühlung des Gehäuses 1 im Bereich der hinteren Verdichterstufe 36b genutzt werden. Zum Erwärmen des Gehäuses 1 im Bereich der vorderen Verdichterstufe 36a wird die vordere Ringraumöffnung 34a zugesteuert und der über den hinteren Ringkanal 30b abgezapfte Teilstrom 26 in dem vorderen Ringkanal 34a umgeleitet. Zum Kühlen des Gehäuses 1 im Bereich der hinteren Verdichterstufe 36a wird die hintere Ringraumöffnung 34a zugesteuert und der über den vorderen Ringkanal 30b abgezapfte Teilstrom 26 in dem hinteren Ringkanal 34b umgeleitet.

Ergänzend kann in dem bzw. in den Axialkanälen 28 eine Ventileinrichtung 38 zum Auf- und Zusteuern des bzw. der Axialkanäle 28 vorgesehen sein. Zur Zuführung eines Außenfluids bzw. eines externen Fluidstroms zum Fluidsystem 24 sowie zur Entnahme des Teilstroms 26, ist im Bereich der Kanäle 28, 30a, 30b zumindest ein Anschlussstutzen 40 vorgesehen.

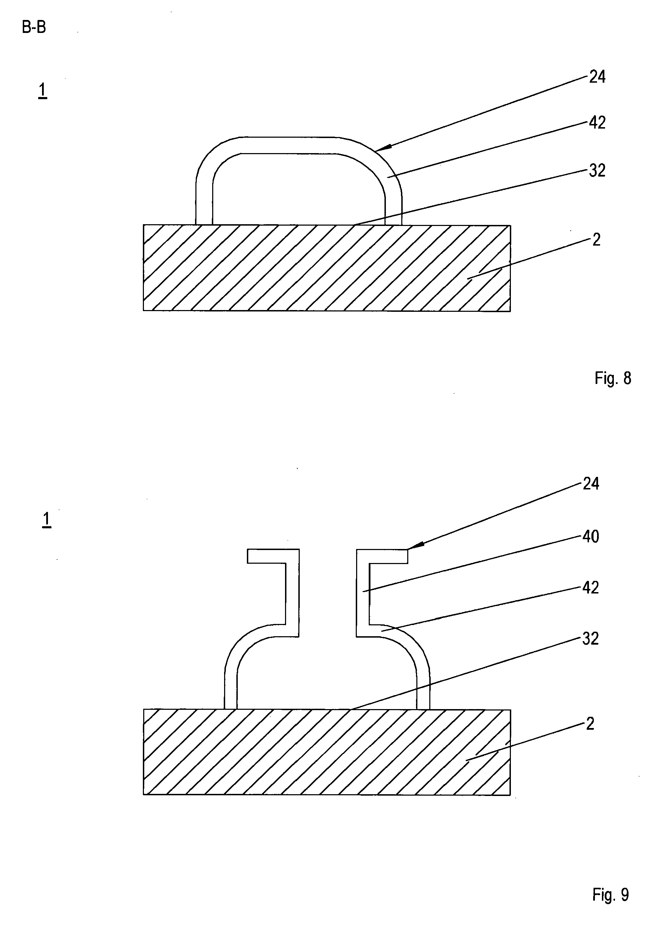

Wie in Figur 1 sowie in den Figuren 7 und 8 gezeigt, kann das Fluidsystem 24 zudem zumindest einen Umfangskanal 42 zur thermischen Einstellung eines Gehäusebereichs und insbesondere zur aktiven Spaltsteuerung im Bereich von Schaufelblattspitzen aufweisen. Der Umfangskanal 42 steht mit dem Axialkanal 28 oder mit zumindest einem der Ringkanäle 30a, 30b in Fluidverbindung und ist zumindest mit einem Wandungsabschnitt 32 in die Umfangswandung 2 integriert. Ringraumöffnungen 34a, 34b wie bei den Ringkanälen 30a, 30b zum Öffnen des Umfangskanals 42 hin zum Ringraum 4 sind nicht vorgesehen. Er kann jedoch wie in Figur 9 gezeigt, einen Anschlussstutzen 40 zur Zuführung eines externen Fluidstroms oder zur Entnahme des Teilstroms 26 aufweisen. Selbstverständlich ist der Anschlussstutzen 40 über eine nicht gezeigte Ventileinrichtung auf- sowie zusteuerbar bzw. über einen Deckel verschlossen.

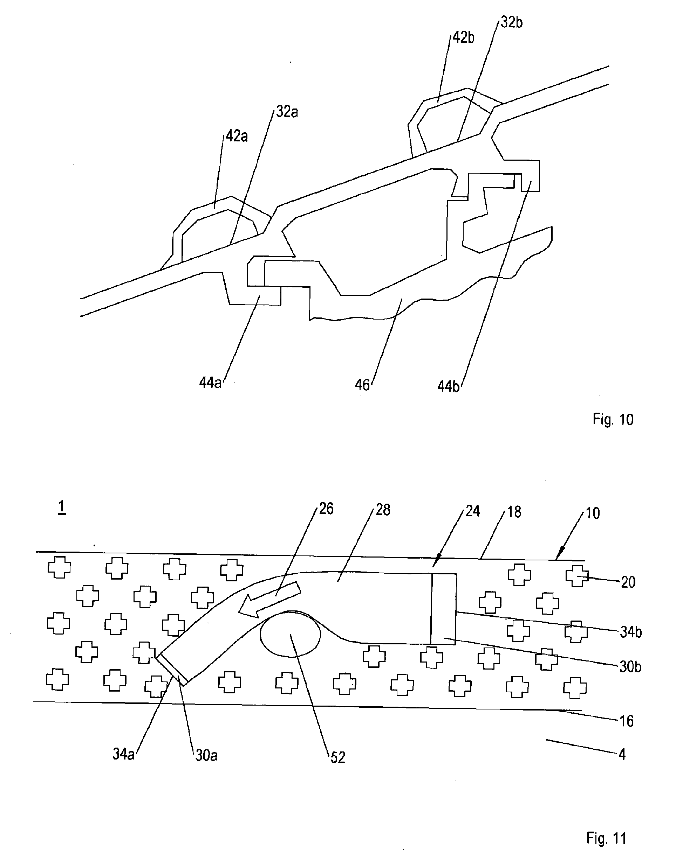

Eine beispielhafte Positionierung von zwei Umfangskanälen 42a, 42b ist im Detail in Figur 10 gezeigt. Vor allem bei Niederdruckturbinen sind kleine Gehäusebereiche thermisch kritisch. Ein beispielhafter Gehäusebereich ist der Bereich, in dem Haken 44a, 44b zur Befestigung von Leitschaufeln 46 positioniert sind. Durch die integrierten Umfangskanäle 42a, 42b kann dieser thermisch hoch beanspruchte Gehäusebereich gezielt mit Kühlluft versorgt werden. Die Kühlluft kann dabei entweder der Teilstrom 26 oder aber ein extern zugeführter Fluidstrom sein.

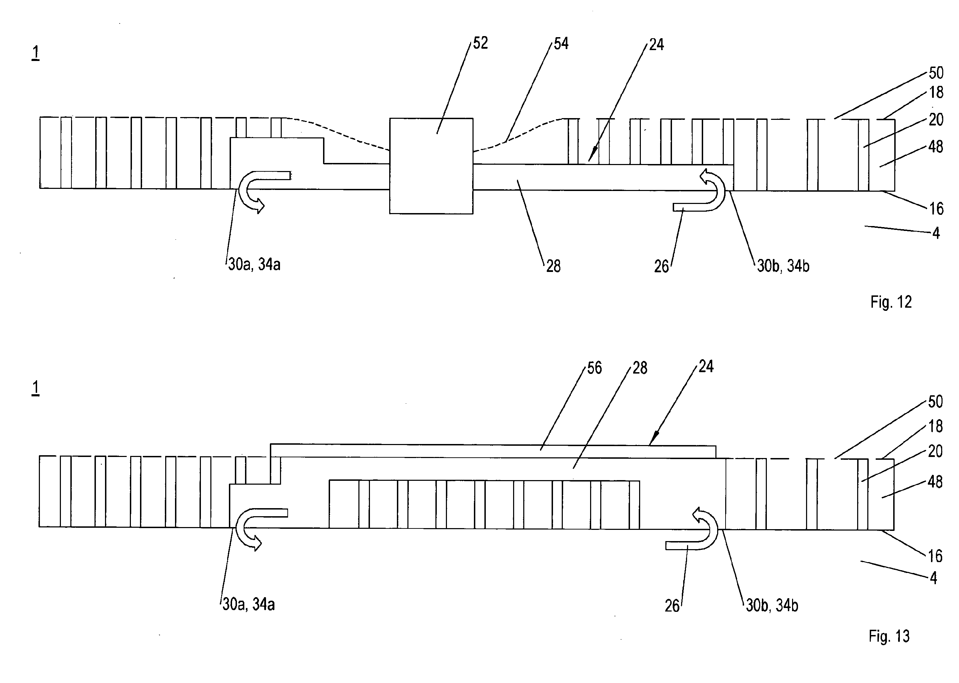

In den Figuren 11 und 12 ist ein Ausführungsbeispiel eines doppelwandigen Gehäuses 1 mit einem integrierten Fluidsystem 24 gezeigt. Vorzugsweise setzt sich das Gehäuse 1 aus einer Vielzahl von Einzelsegmenten 10 wie in den Figuren 4 und 5 gezeigt zusammen. Es hat eine einen Ringraum 4 begrenzende Innenumfangswandung 16 und eine Außenumfangswandung 18, die über eine Stützstruktur 20 voneinander beabstandet und miteinander verbunden sind. Bevorzugterweise wird das Gehäuse 1 mit dem Fluidsystem 24 generativ hergestellt. Zum Entfernen von Pulverrückständen aus einem Zwischenraum 48 zwischen der Innenumfangswandung 16 und der Außenumfangswandung 18 sind in der Außenumfangswandung 18 eine Vielzahl von Durchbrüchen 50 eingebracht. Die Stützstruktur 20 ist vorzugsweise zellulärer Art und hat schwingungsdämpfende Eigenschaften.

Das Fluidsystem 24 hat einen Axialkanal 28, der sich im über den gesamten Gehäuseumfang des montierten Gehäuses 1 zwischen den Umfangswandungen 16, 18 erstreckt. Er ist somit als ein integraler Umfangskanal bzw. Ringkanal ausgebildet. Endseitig mündet der Axialkanal 28 jeweils in einen vorderen Ringkanal 30a und in einen hinteren Ringkanal 30b, die mit jeweils einer ringartigen Ringraumöffnung 34a, 34b versehen sind. Vorzugsweise ist der hintere Ringkanal 30b gegenüber dem vorderen Ringkanal 30a querschnittserweitert. Zur Reduzierung der Bauhöhe des Gehäuses 1 weist dieses zur Aufnahme eines Verstellantriebs 52 für ein Leitgitter eine Vertiefung 54 auf. Stromaufwärts des Verstellantriebs 52 ist der Axialkanal querschnittsreduziert. Zum Auf- und Zusteuern der Ringraumöffnungen 34a, 34b und/oder des Axialkanals 28 hat das Fluidsystem 24 nicht gezeigte Ventileinrichtungen. Wie in den Figuren 11 und 12 gezeigt, wird beispielsweise der Teilstrom 26 im Bereich der hinteren Ringraumöffnung 34b aus dem Ringraum 4 entnommen und zur aerodynamischen Stabilisierung über die vordere Ringraumöffnung 34a wieder in den Ringraum 4 eingeblasen.

Bei einem in Figur 13 gezeigten Ausführungsbeispiel eines doppelwandigen Gehäuses 1 ist im Unterschied zum Ausführungsbeispiel nach Figur 12 anstelle eines Verstellantriebs 52 für ein Leitgitter eine Kühleinrichtung 56 in Form von Kühlrippen angeordnet. Die zur Außenumgebung weisende Kühleinrichtung 56 bildet einen außenumfangsseitigen Abschnitt des Axialkanals 28 und bewirkt eine Kühlung des Teilstroms 26 beim Durchströmen des Axialkanals 28. Selbstverständlich können die Kühleinrichtung 56 und der Verstellantrieb 52 auch in einem Ausführungsbeispiel miteinander kombiniert werden.

In Figur 14 ist ein prinzipielles Schaltbild eines erfindungsgemäßen Fluidsystems 24 zum Umleiten eines Teilstroms 26 integriert in ein Gehäuse 1 eines vierstufigen Verdichters einer Strömungsmaschine gezeigt. Das Fluidsystem 24 hat zumindest zwei koaxiale Umfangskanäle 28', 28", die sich über sämtliche Verdichterstufen 36a, 36b, 36c, 36d erstrecken. Im Bereich der ersten Maschinenstufe 36a ist eine Ventileinrichtung mit zumindest einem Einlassventil 58a zum Einblasen des Teilstroms 26 und/oder eines externen Fluidstroms in den Ringraum 4 und somit in die Hauptströmung 6 angeordnet. Im Bereich der zweiten Stufe 36b ist eine Ventileinrichtung mit zumindest einem Einlassventil 58b sowie mit zumindest einem Auslassventil 60b zum Ein- und Ausblasen des Teilstroms 26 und/oder eines externen Fluidstroms vorgesehen. Im Bereich der dritten Stufe 36c ist eine Ventileinrichtung mit zumindest einem Einlassventil 58c sowie mit zumindest einem Auslassventil 60c vorgesehen. Im Bereich der vierten Stufe 36d ist eine Ventileinrichtung mit zumindest einem Auslassventil 60d angeordnet.

Durch die Mehranordnung der Axialkanäle 28 bzw. 28', 28" sowie der hier nicht gezeigten Ringkanäle 30 bzw. 30a, 30b, 30c, 30d entsteht zum Einen eine Redundanz und somit eine erhöhte Betriebssicherheit beim Ausfall einzelner Kanäle 28, 30 bzw. Ventile 58 bzw. 58a, 58b, 58c und 60 bzw. 60b, 60c, 60d. Zum Anderen können verschiedene Paarungen einer Teilstromumleitung realisiert werden und das Fluidsystem 24 stufenübergreifend betrieben werden.

Die Ventile 58, 60 sind einzeln schaltbar und regelbar. Somit ist auch der jeweilige Teilstrom 26 regelbar. Die Ventile 58, 60 sind so ausgeprägt, dass sie kurze Ansprechzeiten haben. Damit kann zum Beispiel bei einer diagnostizierten Stabilitätsstörung (beginnendes Pumpen und ähnliches) schnell eine große Teilstrommenge zur Stabilisierung der Hauptströmung 6 eingeblasen werden und bei dem danach erreichten stabilen Zustand nur noch ein minimal erforderliche Teilstrommenge eingeblasen werden. Vorzugsweise sind die Einlassventile 58 pulsierend betreibbar, so dass mit einem geringen Teilstrom 26 eine große aerodynamische Stabilität erzeugt werden kann.

Vorteilhafterweise sind in den Kanälen 28, 30, 42 und in das Gehäuse 1 Sensoren wie Druck- und Temperatursensoren integriert. Diese wirken zum einen als Regelgrößen für die Zumessung des Teilstroms 26 bzw. des externen Fluidstroms und zum anderen zur Fehlererkennung. Zum Beispiel lassen sich hierdurch Redundanzen beheben bzw. verringern.

Im Folgenden werden einzelne beispielhafte Schaltstellungen des Fluidsystems 24 gezeigt. In den Figuren 15, 16 und 17 erfolgt jeweils eine aerodynamischen Stabilisierung und in den Figuren 18 und 19 eine thermische Stabilisierung. Das erfindungsgemäße Fluidsystem 24 erlaubt jedoch die gleichzeitige aerodynamische und thermische Stabilisierung.

In Figur 15 wird zum Beispiel ein Teilstrom 26c an der dritten Stufe 36c und ein Teilstrom 26d an der vierten Stufe 36d entnommen und im Bereich der ersten Stufe 36a bzw. der zweiten Stufe 36b zur aerodynamischen Stabilisierung in den Ringraum 4 eingeblasen. Der Teilstrom 26c wird dabei durch den Axialkanal 28' und der Teilstrom 26d wird durch den Axialkanal 28" geführt

Bei dem in Figur 16 gezeigten Ausführungsbeispiel wird beispielsweise ausschließlich im Bereich der vierten Stufe 36d ein Teilstrom 26d entnommen. Der Teilstrom 26d wird dann als geteilte Teilströme 26dₐ, 26d_{b} zur ersten Stufe 36a und zur zweiten Stufe 36b geführt und dort zur aerodynamischen Stabilisierung in den Ringraum 4 eingeblasen. Der Teilstrom 26dₐ wird dabei durch den Axialkanal 28' und der Teilstrom 26d_{b} wird durch den Axialkanal 28" geführt.

Bei dem in Figur 17 gezeigten Ausführungsbeispiel wird beispielsweise im Bereich der vierten Stufe 36d ein Teilstrom 26 entnommen und über den Axialkanal 28" im Bereich der zweiten Stufe 36b zur aerodynamischen Stabilisierung in den Ringraum 4 eingeblasen. Alternativ kann, wie durch die unterschiedliche Linienart verdeutlicht, der Teilstrom 26 auch durch den Axialkanal 28' geführt werden.

In den Figur 18 ist ein Ausführungsbeispiel gezeigt, bei dem eine Kühlung eines Gehäusebereichs im Bereich der vierten Stufe 36d erfolgt. Durch die Kühlung des Gehäuses 1 ist es möglich, im jeweiligen Betriebszustand das Gehäuse 1 an den notwendigen Bereichen thermisch zu beeinflussen und damit den Radialspalt zu steuern. Dies ist besonders bei transienten Vorgängen, zum Beispiel bei einer Beschleunigung und einer Verzögerung, von Bedeutung und kann das Betriebsverhalten des Verdichters maßgeblich beeinflussen. Hierzu wird ein Teilstrom 26a im Bereich der ersten Stufe 36a abgezapft und über den einen Axialkanal 28" in den zum Ringraum 4 zugesteuerten hinteren Ringkanal 30d der vierten Maschinenstufe 36d eingeblasen, ohne in den Ringraum 4 einzutreten. Hierdurch kann zum Beispiel bei einer Beschleunigung eine Spalterhöhung an der hinteren Stufen 36d und somit ein Wirkungsgradabfall reduziert werden. Zur Entnahme des Teilstroms 26 aus dem jeweiligen Ringkanal 30a, 30d ist jeweils eine nicht gezeigte Auslassöffnung vorgesehen. Der aus dem Fluidsystem 24 entnommene Teilstrom 26 kann beispielsweise als Zapfluft für flugzeugkabinenseitige Anwendungen weiterverwendet werden.

In Figur 19 ist ein Ausführungsbeispiel einer Gehäuseerwärmung gezeigt, bei dem im Bereich der vierten Stufe 36d ein Teilstrom 26d entnommen und über den Axialkanal 28" in den vorderen zugesteuerten Ringkanal 30a eingeblasen wird, ohne in den Ringraum 4 einzutreten. Hierdurch kann beispielsweise beim Verzögern bzw. Abbremsen der Strömungsmaschine ein Einlaufen eines noch heißen, thermisch gegenüber dem dünnwandigen Gehäuse 1 trägeren Rotors verhindert werden.

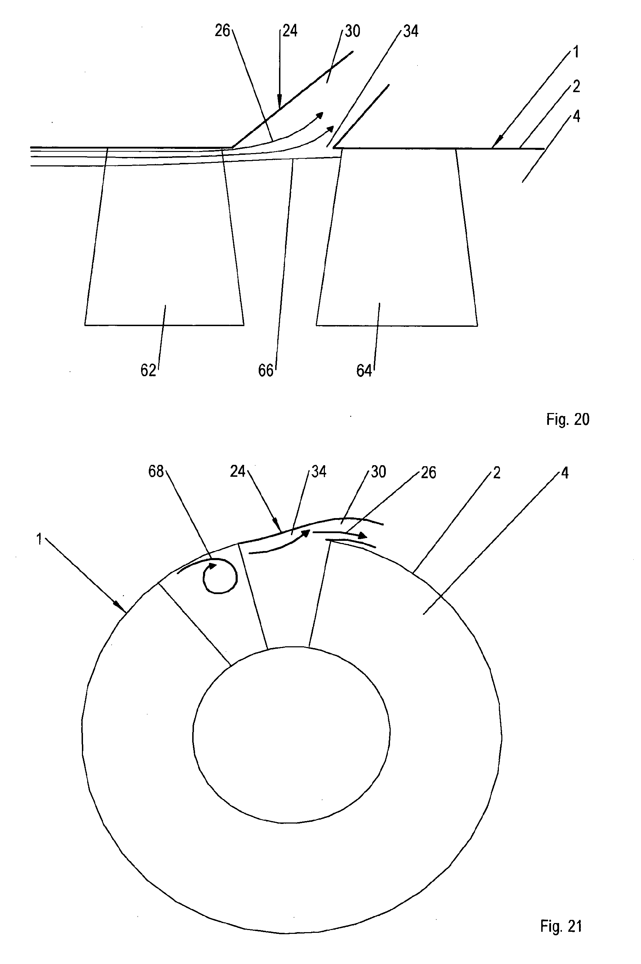

In Figur 20 ist ein Ausführungsbeispiel gezeigt, bei dem das Fluidsystem 24 zur Grenzschichtabsaugung im Seitenwandbereich bzw. im Bereich der Umfangswandung 2 des Ringraums 4 verwendet wird. Insofern wird der Teilstrom 26 von der abgesaugten Grenzschicht gebildet. Die Absaugung erfolgt zwischen einer Leitschaufelreihe 62 und einer Laufschaufelreihe 64 und bewirkt eine verbesserte Rotorzuströmung 66. Durch das generative Verfahren kann die Ringraumöffnung 34 des jeweiligen Ringkanals strömungstechnisch und strukturmechanisch derart in das Gehäuse 1 integriert werden, dass die Grenzschichtentnahme relativ verlustarm erfolgt und zudem eine axiale Verlängerung des Ringraums 4 verhindert wird. Der Teilstrom 26 kann beispielsweise als Zapfluft für flugzeugseitige Kabinenanwendungen verwendet werden.

In Figur 21 ist ein Ausführungsbeispiel gezeigt, bei dem der Teilstrom 26 von einer abgesaugten Sekundärströmung gebildet wird. Eine Reduktion der Sekundärströmung im Bereich der Innenumfangswandung 16 beeinflusst die Grenzschicht stromabwärts positiv. Eine Verwirbelung 68 wird wirkungsvoll verhindert, wodurch zum einen Wirkungsgradverluste reduziert werden und zum anderen die aerodynamische Stabilität erhöht wird.

Offenbart ist ein Gehäuse für eine Strömungsmaschine, insbesondere ein Flugzeugtriebwerk, mit einer Umfangswandung zur Begrenzung eines von einer Hauptströmung durchströmbaren Ringraums, und mit einem Fluidleitsystem zum Umleiten eines Teilstroms der Hauptströmung, das einen Axialkanal, einen vorderen Ringkanal und einen hinteren Ringkanal hat, die mit dem Axialkanal in Fluidverbindung stehen und eine vordere Ringraumöffnung und eine hintere Ringraumöffnung aufweisen, wobei das Fluidsystem eine vordere Ventileinrichtung und eine getrennt ansteuerbare hintere Ventileinrichtung zum Auf- und Zusteuern der Ringraumöffnungen und eine Auslassöffnung zur Entnahme des Teilstroms aus dem Fluidsystem hat, und wobei im zugesteuerten Zustand der hinteren Ringraumöffnung der Teilstrom durch den hinteren Ringkanal führbar ist und im zugesteuerten Zustand der vorderen Ringraumöffnung der Teilstrom durch den vorderen Ringkanal führbar ist, sowie eine Strömungsmaschine mit einem derartigen Gehäuse.

### Bezugszeichenliste

- 1: Gehäuse
- 2: Umfangswandung
- 4: Ringraum
- 6: Hauptströmung
- 8: Halbschale
- 10, 10a, 10b: Einzelsegment
- 12: Verbindungselement
- 14: Verbindungselement
- 16: Innumfangswandung und
- 18: Außenumfangswandung
- 20: Stützstruktur
- 22: Versteifungsrippe
- 24: Fluidleitsystem
- 26, 26a, c, d, dₐ, d_{b}: Teilstrom
- 28, 28', 28": Axialkanal
- 30, 30a, b, c, d: Ringkanal
- 31: Hilfslinie
- 32, 32a, b: Wandungsabschnitt
- 34a, b: Ringraumöffnung
- 36a, 36b, c, d: Verdichterstufe
- 38: Ventileinrichtung
- 40: Anschlussstutzen, Auslassöffnung
- 42, 42a, b: Umfangskanal
- 44a, b: Haken
- 46: Leitschaufel
- 48: Zwischenraum
- 50: Durchbruch
- 52: Verstellantrieb
- 54: Vertiefung
- 56: Kühleinrichtung
- 58, 58a, b, c: Einlassventil
- 60, 60b, c, d: Auslassventil
- 62: Leitschaufelreihe
- 64: Laufschaufelreihe
- 66: Rotorzuströmung
- 68: Verwirbelung

## Patentansprüche

1. Gehäuse (1) für eine Strömungsmaschine, insbesondere ein Flugzeugtriebwerk, mit einer Umfangswandung (2) zur Begrenzung eines von einer Hauptströmung (6) durchströmbaren Ringraums (4), und mit einem Fluidleitsystem (24) zum Umleiten eines Teilstroms (26) der Hauptströmung (6), das einen Axialkanal (28), einen vorderen integralen Ringkanal (30a) und einen hinteren integralen Ringkanal (30b) hat, die mit dem Axialkanal (28) in Fluidverbindung stehen und die eine vordere Ringraumöffnung (34a) und eine hintere Ringraumöffnung (34b) aufweisen, **gekennzeichnet durch** eine vordere Ventileinrichtung und **durch** eine getrennt ansteuerbare hintere Ventileinrichtung zum Auf- und Zusteuern der Ringraumöffnungen (34a, 34b) und **durch** eine Auslassöffnung (40) zur Entnahme des Teilstroms (26) aus dem Fluidsystem (24), wobei im zugesteuerten Zustand der hinteren Ringraumöffnung (34b) der Teilstrom (26) **durch** den hinteren Ringkanal (30b) führbar ist und im zugesteuerten Zustand der vorderen Ringraumöffnung (34a) der Teilstrom (26) **durch** den vorderen Ringkanal (30a) führbar ist.

2. Gehäuse nach Anspruch 1, wobei der Axialkanal (28) einen gemeinsamen Umfangsabschnitt (32) mit dem Gehäuse (1) bildet.

3. Gehäuse nach Anspruch 1 oder 2, wobei sich der Axialkanal (28) in Umfangsrichtung des Gehäuses (1) erstreckt.

4. Gehäuse nach Anspruch 1, 2 oder 3, wobei eine Vielzahl von Axialkanälen (28', 28") vorgesehen sind, die über den Gehäuseumfang verteilt sind.

5. Gehäuse nach einem der vorhergehenden Ansprüche, wobei die Ringkanäle (30a, 30b) auf jeweils eine Maschinenstufe (36a, 36b) begrenzt sind.

6. Gehäuse nach einem der vorhergehenden Ansprüche, wobei das Fluidsystem (24) zumindest einen weiteren Ringkanal (30c, 30d) mit einer Ringraumöffnung hat, dem jeweils eine einzeln ansteuerbare Ventileinrichtung (58, 60) zum Auf- und Zusteuern der Ringraumöffnung zugeordnet ist.

7. Gehäuse nach einem der vorhergehenden Ansprüche, wobei das Fluidsystem (24) einen zum Ringraum (4) hin geschlossenen Umfangskanal (42) hat, der mit zumindest einem der Kanäle (28, 30) in Fluidverbindung steht.

8. Gehäuse nach einem der vorhergehenden Ansprüche, wobei der zumindest eine Axialkanal (28) eine zur Außenumgebung weisende Kühleinrichtung (56) hat.

9. Gehäuse nach einem der vorhergehenden Ansprüche, wobei das Fluidleitsystem (24) eine Außenöffnung (40) zum Einleiten eines Außenfluids in die Ringkanäle (30a, 30b) hat.

10. Gehäuse nach einem der vorhergehenden Ansprüche, wobei Einlassventile (58) der Ventileinrichtungen pulsierbar sind.

11. Gehäuse nach einem der vorhergehenden Ansprüche, wobei das Gehäuse (1) aus einer Vielzahl von Segmenten (8, 10) zusammengesetzt ist.

12. Strömungsmaschine mit einem Gehäuse (1) nach einem der vorhergehenden Ansprüche.

## Claims

1. A housing (1) for a turbomachine, in particular an aircraft engine, having a peripheral wall (2) for delimiting an annular space (4), through which a main flow (6) can flow, and having a fluid-conveying system (24) for redirecting a partial flow (26) of the main flow (6) that has an axial channel (28), a front integral annular channel (30a) and a rear integral annular channel (30b) which are in fluid connection with the axial channel (28) and have a front annular-space opening (34a) and a rear annular-space opening (34b), **characterised by** a front valve device and by a rear valve device, which can be activated separately, for opening and closing the annular-space openings (34a, 34b) and by an outlet opening (40) for tapping the partial flow (26) out of the fluid system (24), wherein in the closed state of the rear annular-space opening (34b) the partial flow (26) can be guided through the rear annular channel (30b) and in the closed state of the front annular-space opening (34a) the partial flow (26) can be guided through the front annular channel (30a).

2. A housing according to claim 1, wherein the axial channel (28) forms a common peripheral section (32) with the housing (1).

3. A housing according to claim 1 or 2, wherein the axial channel (28) extends in the peripheral direction of the housing (1).

4. A housing according to claim 1, 2 or 3, wherein a plurality of axial channels (28', 28") is provided, distributed over the housing periphery.

5. A housing according to one of the preceding claims, wherein the annular channels (30a, 30b) are limited to, in each case, one machine stage (36a, 36b).

6. A housing according to one of the preceding claims, wherein the fluid system (24) has at least one further annular channel (30c, 30d) with an annular-space opening to which, in each case, a valve device (58, 60), which can be activated individually, is assigned for opening and closing the annular-space opening.

7. A housing according to one of the preceding claims, wherein the fluid system (24) has a peripheral channel (42) which is closed towards the annular space (4) and is in fluid connection with at least one of the channels (28, 30).

8. A housing according to one of the preceding claims, wherein the at least one axial channel (28) has a cooling device (56) pointing towards the outside environment.

9. A housing according to one of the preceding claims, wherein the fluid-conveying system (24) has an outside opening (40) for introducing an external fluid into the annular channels (30a, 30b).

10. A housing according to one of the preceding claims, wherein inlet valves (58) of the valve devices can be pulsed.

11. A housing according to one of the preceding claims, wherein the housing (1) is composed of a plurality of segments (8, 10).

12. A turbomachine having a housing (1) according to one of the preceding claims.

## Revendications

1. Boîtier (1) pour une turbomachine, en particulier un moteur d'avion, avec une paroi périphérique (2) pour la délimitation d'un espace annulaire (4) pouvant être traversé par un écoulement principal (6) et avec un système de conduite fluidique (24) pour la déviation d'un courant partiel (26) de l'écoulement principal (6) qui présente un canal axial (28), un canal annulaire avant (30a) intégral et un canal annulaire arrière (30b) intégral qui sont en liaison fluidique avec le canal axial (28) et qui présentent une ouverture d'espace annulaire avant (34a) et une ouverture d'espace annulaire arrière (34b), **caractérisé par** un dispositif de soupape avant et par un dispositif de soupape arrière pouvant être commandé séparément pour la commande d'ouverture et de fermeture des ouvertures d'espace annulaire (34a, 34b) et par une ouverture de sortie (40) pour le retrait du courant partiel (26) hors du système fluidique (24), à l'état de fermeture commandée de l'ouverture d'espace annulaire arrière (34b), le courant partiel (26) pouvant être guidé par le canal annulaire arrière (30b) et, à l'état de fermeture commandée de l'ouverture d'espace annulaire avant (34a), le courant partiel (26) pouvant être guidé par le canal annulaire avant (30a).

2. Boîtier selon la revendication 1, dans lequel le canal axial (28) forme une section périphérique (32) commune avec le boîtier (1).

3. Boîtier selon la revendication 1 ou 2, dans lequel le canal axial (28) s'étend dans le sens périphérique du boîtier (1).

4. Boîtier selon la revendication 1, 2 ou 3, dans lequel une pluralité de canaux axiaux (28', 28") est prévue, lesquels sont répartis sur la périphérie de boîtier.

5. Boîtier selon l'une quelconque des revendications précédentes, dans lequel les canaux annulaires (30a, 30b) sont délimités sur respectivement un étage de machine (36a, 36b).

6. Boîtier selon l'une quelconque des revendications précédentes, dans lequel le système fluidique (24) présente au moins un autre canal annulaire (30c, 30d) avec une ouverture d'espace annulaire, auquel respectivement un dispositif de soupape (58, 60) pouvant être commandé individuellement pour la commande d'ouverture et de fermeture de l'ouverture d'espace annulaire est associé.

7. Boîtier selon l'une quelconque des revendications précédentes, dans lequel le système fluidique (24) présente un canal périphérique (42) fermé vers l'espace annulaire (4), qui est en liaison fluidique avec au moins l'un des canaux (28, 30).

8. Boîtier selon l'une quelconque des revendications précédentes, dans lequel l'au moins un canal axial (28) présente un dispositif de refroidissement (56) tourné vers l'environnement extérieur.

9. Boîtier selon l'une quelconque des revendications précédentes, dans lequel le système de conduite fluidique (24) présente une ouverture extérieure (40) pour l'introduction d'un fluide extérieur dans les canaux annulaires (30a, 30b).

10. Boîtier selon l'une quelconque des revendications précédentes, dans lequel des soupapes d'entrée (58) des dispositifs de soupape peuvent produire des pulsations.

11. Boîtier selon l'une quelconque des revendications précédentes, dans lequel le boîtier (1) est composé d'une pluralité de segments (8, 10).

12. Turbomachine avec un boîtier (1) selon l'une quelconque des revendications précédentes.
